# EUROPÄISCHE PATENTSCHRIFT

(11) **EP 2 852 513 B1**
(45) Veröffentlichungstag und Bekanntmachung des Hinweises auf die Patenterteilung: **03.08.2016**
(21) Anmeldenummer: 13733997.4
(22) Anmeldetag: 24.06.2013
(51) Int. Cl.: B60R 16/02, H02G 3/00, H05K 13/00

(54) **VERFAHREN ZUM HERSTELLEN VON BAUGRUPPEN**
METHOD FOR PRODUCING SUB-ASSEMBLIES
PROCÉDÉ DE RÉALISATION D'ENSEMBLES

(30) Priorität: 04.07.2012 DE 102012211652
(43) Veröffentlichungstag der Anmeldung: 01.04.2015
(73) Patentinhaber: Siemens Aktiengesellschaft, 80333 München (DE)
(72) Erfinder: SCHNEIDER, Thomas, 85247 Schwabenhausen (DE); SCHWARZ, Erich, 51645 Gummersbach (DE); DIETRICH, Andreas, 81737 München (DE); HILLEBRECHT, Chris, 85716 Unterschleissheim (DE); LEISGANG, Michael, 80687 München (DE)
(86) Internationale Anmeldenummer: PCT/EP2013/063132
(87) Internationale Veröffentlichungsnummer: WO 2014/005870

(56) Entgegenhaltungen:
- WO-A1-03/031094
- WO-A2-2007/044558
- WO-A2-2009/120295
- US-A- 2 805 471
- US-A- 3 377 915
- US-A- 5 127 062

## Beschreibung

Die Erfindung betrifft ein Verfahren zum Herstellen von Baugruppen, zwischen denen sich elektrische Verbindungen erstrecken, mit Arbeitsschritten, die in einem gemeinsamen Arbeitsbereich durchgeführt werden.

In der Regel werden Baugruppen oder Bauteile in die dazu vorgesehenen Einbauorte verbaut und anschließend über Verbindungen wie Kabelverbindungen und Signalleitungen mit anderen Baugruppen, wie Bauteilen, Energieversorgungsquellen oder dergleichen verbunden. In diesem Zusammenhang kommt es auch zur Verlegung von Kabelbäumen, beispielsweise im Bodenbereich eines Schienenfahrzeugs. Beim Zuschnitt der Kabel der Verbindungen werden diese eindimensional gezogen und auf die gewünschte Länge geschnitten. In einem separaten zweiten Arbeitsschritt werden die Kabel in eine zweidimensionale Anordnung gebracht und abgebunden. Hierbei werden diverse Messvorgänge mehrfach manuell durchgeführt. Um die Kabel in die richtige Anordnung und Anschlussverbindung zu bringen, werden die Verlegewege in Papierform oder auf Bildschirmen skizziert. In jedem Falle ist diese Darstellung räumlich getrennt von dem Arbeitsbereich, in dem die Bauteile verbaut werden sollen. Der Betrachter muss daher vom Informationsmaterial zum eigentlichen Einbauort mit dem Auge hin und her springen. Dies ist die Quelle von Fehlern bei der Montage.

Die Patentschrift US 5,127,062 A zeigt einen Mikrocomputer, der mit einem Barcodeleser verbunden ist. Der Barcodeleser kann Kabel oder Leitungen identifizieren. Entsprechend der identifizierten Leitungen steuert der Mikrocomputer einen Laser derart an, dass dieser einen Laserstrahl auf einen Träger richtet, sodass entsprechend dem projizierten Laserstrahl eine Lichtspur des Verlegewegs des identifizierten Kabels opfisch angezeigt wird. Insbesondere zeigt der Laserstrahl auch an, wo sich die einzelnen Anschlüsse für das Kabel befinden.

Die Patentschrift US 3,377,915 A zeigt eine Montagefläche, auf welcher eine Leiterplatte angeordnet ist. Oberhalb der Leiterplatte ist ein optischer Projektor vorgesehen, der Bilder von verschiedenen Folien auf die Leiterplatte projiziert. Die Folien sind an einer Scheibe montiert. Unterhalb der Montagefläche ist eine weitere Scheibe mit verschiedenen Fächern vorgesehen, wobei die Fächer Teile enthalten, die mittels des projizierten Bildes auf der Leiterplatte angezeigt werden. Denn die Folien zeigen Instruktionen, wo welches Teil auf der Leiterplatte angeordnet werden soll. Die Scheibe ist mit der weiteren Scheibe gekoppelt, sodass sich diese stets gemeinsam drehen.

Die Offenlegungsschrift WO 2007/044558 A2 zeigt ein Montagesystem. Ein zu bestückendes Bauteil liegt unter zwei Leuchtvorrichtungen, die optisch einem Bediener anzeigen können, welche Elemente er für den nächsten Bestückungsschritt verwenden soll. Die Leuchtvorrichtungen zeigen auch entsprechende Montageschritte an.

Die Patentschrift US 2,805,471 A zeigt ein Verfahren, in welchem ein bereits verdrahtetes Bauteil fotografiert wird. Die Fotografie wird als Projektionsfolie verwendet, um auf einem noch nicht verdrahteten Bauteil optisch mittels der Projektion anzuzeigen, wo was verdrahtet werden muss.

Die Offenlegungsschrift WO 03/031094 A1 zeigt einen Laserprojektor, der auf einen Tisch ein Muster projiziert. Das projizierte Lasermuster zeigt ein Verdrahtungslayout an. Entsprechend dem projizierten Muster wird dann eine Bestückung eines Bauteils durchgeführt.

Die WO 2009/120295 A2 zeigt ein Montagesystem. Es ist ein Display vorgesehen, der ein so genanntes Pegboard gemäß zu bestückender Bauteile beleuchtet. Entsprechend der Beleuchtung werden dann die einzelnen Bauteile bestückt.

Aufgabe der Erfindung ist es daher, ein Verfahren der eingangs genannten Art bereitzustellen, das die Fertigung erleichtert und Fehlerquellen möglichst vermeidet.

Die Erfindung löst diese Aufgabe dadurch, dass die Arbeitsschritte in dem Arbeitsbereich optisch visualisiert werden.

Erfindungsgemäß wird beispielsweise dem Monteur im Arbeitsfeld der nächste Arbeitsschritt visualisiert. Die Visualisierung ist im Rahmen der Erfindung grundsätzlich beliebig. So umfasst die Visualisierung das Beleuchten eines aufzunehmenden Kabels einer der Verbindungen, wobei darüber hinaus die Zuschnittslänge neben dem Kabel im Arbeitsbereich angezeigt wird und/oder wobei die Schnittstelle auf dem Kabel angeleuchtet wird. Aufgrund dieser Visualisierung des Arbeitsschrittes im Arbeitsbereich selbst ist die Informationsbereitstellung nicht mehr räumlich getrennt vom Arbeitsbereich. Das hin und her Springen mit dem Auge und Messen bei der Montage ist erfindungsgemäß überflüssig geworden. Die Gefahr eines fehlerhaften Zusammenbaus ist daher verringert. Der Arbeitsbereich ist im Rahmen der Erfindung so groß dimensioniert, wie es die jeweilige Anwendung erfordert und ist beliebig erweiterbar.

Vorteilhafterweise wird zur optischen Visualisierung des exakten Verlegeweges eines Kabels / Kabelbaumes dieser durch eine Lichtquelle beleuchtet, wobei das Bauteil anschließend von Hand ein-/verlegt wird. Als Lichtquelle dient beispielsweise ein Laser, der über Linsen und bewegliche Spiegel beispielsweise den Auslasspunkt so schnell umkreist, dass vom Auge lediglich ein permanenter Lichtrahmen um den Auslass vom Monteur wahrgenommen wird. Anstelle eines Lasers kann jedoch auch eine beliebige andere Lichtquelle, beispielsweise eine Weißlichtquelle oder Diode dienen. Neben bewegten Spiegeln oder sonstigen optischen Bauelementen können im Rahmen der Erfindung auch zweckmäßige Schablonen oder Blenden eingesetzt werden.

Vorteilhafterweise werden die beim nächsten Arbeitsschritt zu verbauenden Bauteile mit einer Kennung versehen, wobei die Visualisierung in Abhängigkeit der Kennung erfolgen kann. Gemäß dieser vorteilhaften Weiterentwicklung erkennt eine Überwachungseinheit, die beispielsweise mit Kameras bestückt ist, ob ein Arbeitsschritt abgeschlossen wurde. Alternativ gibt der Monteur durch eine beliebige Bestätigung an, dass der Arbeitsschritt abgeschlossen wurde. Erkennt das System, dass der Arbeitsschritt abgeschlossen ist, erfasst es mit den besagten Kameras den Arbeitsbereich, wobei auf Grundlage einer internen Logik das nächste zu verbauende Bauteil bzw. der nächste Arbeitsschritt anhand seiner Kennung oder fest definierten Plätzen erkannt wird. Kameras sind im Rahmen der Erfindung jedoch nicht zwingend notwendig. Der gesamte Arbeitsfortschritt kann auch vollständig werkergeführt sein oder durch Laserscanner oder ähnliches abgeprüft werden. Anschließend wird der nächste Arbeitsschritt begonnen.

Vorteilhafterweise wird zur optischen Visualisierung der Verlegeweg oder die Verlegestrecke für einen Kabelbaum einer der Verbindungen mit Hilfe einer Lichtquelle im Arbeitsbereich beleuchtet. Gemäß dieser vorteilhaften Weiterentwicklung wird ein zweidimensionaler Verlegeweg durch die schnelle Bewegung eines Lichtstrahls entlang des Verlegeweges visualisiert. Auch kann der gesamte Verlegeweg mittels Blenden, Masken oder Schablonen beleuchtet sein.

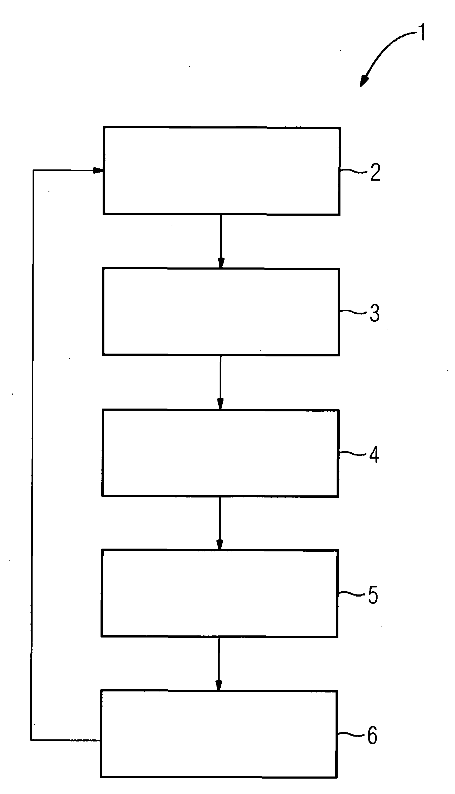

Weitere zweckmäßige Ausgestaltungen und Vorteile der Erfindung sind Gegenstand der nachfolgenden Beschreibung von Ausführungsbeispielen der Erfindung unter Bezug auf die Figur der Zeichnung, wobei gleiche Bezugszeichen auf gleich wirkende Bauteile verweisen und wobei die
- Figur: ein Ausführungsbeispiel des erfindungsgemäßen Verfahrens zeigt.

Die Figur zeigt ein Ausführungsbeispiel des erfindungsgemäßen Verfahrens, in dem die Verfahrensschritte durch Kästchen angezeigt werden. Gemäß dem Verfahren 1 wird in dem ersten Arbeitsschritt 2 die jeweilige Kennung der zu verbauenden Bauteile durchgeführt. Der Lagerort wird einer zentralen Steuereinheit im Verfahrensschritt 3 übermittelt. Diese zentrale Steuerungseinheit berechnet im Verfahrensschritt 4 den Einbauort und steuert im Arbeitsschritt 5 eine Optikeinheit einer Lichtquelle an, den von der Lichtquelle erzeugten Lichtstrahl so in den Arbeitsbereich zu projizieren, dass der Verlegeweg des im Arbeitsschritt 2 erfassten Kabels im Arbeitsschritt 6 beleuchtet wird, wobei dieser auch in mehrere Abschnitte gegliedert sein kann. Ist der Arbeitsschritt abgeschlossen, beginnt das Verfahren 1 mit dem nächsten Arbeitsschritt, bis das Bauteil, sprich der Kabelkanal oder Kabelbaum fertig verlegt ist.

Es ist bei dieser Anlage unerheblich ob einzelne Arbeitsschritte dabei maschinell unterstützt oder ersetzt werden. Diese wären z.B. das markieren, ziehen oder einlegen von Kabeln. Zur ergonomischen oder technischen notwendigen Arbeitsplatzgestaltung kann der Arbeitsbereich gleichfalls gedreht werden. Dies geschieht vorteilhafterweise z. B. durch einen Dreh-Kipptisch oder ähnliche Vorrichtungen. Die Position des Tisches kann dabei sowohl angezeigt als auch direkt über eine Steuerung eingestellt werden.

## Patentansprüche

1. Verfahren (1) zum Herstellen von Baugruppen, zwischen denen sich elektrische Verbindungen erstrecken, mit mehreren Arbeitsschritten, die in einem gemeinsamen Arbeitsbereich durchgeführt werden, wobei
die Arbeitsschritte in dem Arbeitsbereich optisch visualisiert werden, **dadurch gekennzeichnet, dass** die Visualisierung ein Beleuchten eines aufzunehmenden Kabels einer der Verbindungen umfasst, wobei eine Zuschnittslänge neben dem Kabel im Arbeitsbereich angezeigt wird und/oder wobei eine Schnittstelle auf dem Kabel angeleuchtet wird, wobei der Arbeitsbereich zur Montage eines Schienenfahrzeugs dient, wobei zur optischen Visualisierung ein Verlegeweg für die Verbindungen durch eine Lichtquelle beleuchtet wird, wobei die Verbindung anschließend in dem Verlegeweg montiert wird.

2. Verfahren (1) nach Anspruch 1,
**dadurch gekennzeichnet, dass** die Montage zumindest teilweise von Hand erfolgt.

3. Verfahren (1) nach einem der vorhergehenden Ansprüche, **dadurch gekennzeichnet, dass** die Bauteile mit einer Kennung oder festem Lagerort versehen werden, wobei die Visualisierung in Abhängigkeit der Kennung oder des Lagerortes erfolgt.

## Claims

1. Method (1) for producing sub-assemblies linked by electrical connections, comprising a plurality of work steps that are carried out in a common working area, wherein
the work steps are optically visualised in the working area, **characterised in that** the visualisation consists of illuminating a to-be-accommodated cable of one of the connections, wherein a cutting length is indicated adjacent to the cable in the working area and/or wherein a cutting point on the cable is illuminated, wherein the working area is used for the assembly of a rail vehicle, wherein, for optical visualisation, a routing path for the connections is illuminated by a light source, wherein the connection is then assembled in the routing path.

2. Method (1) according to claim 1,
**characterised in that** assembly is performed at least partly manually.

3. Method (1) according to one of the preceding claims, **characterised in that** the components are provided with an identifier or fixed storage location, wherein visualisation takes place according to the identifier or storage location.

## Revendications

1. Procédé ( 1 ) de fabrication d'ensembles entre lesquels s'étendent des liaisons électriques, ayant plusieurs stades de travail, qui sont effectués dans une zone de travail commune, dans lequel
on visualise optiquement les stades de travail dans la zone de travail, **caractérisé en ce que** la visualisation comprend un éclairage d'un câble à recevoir de l'une des liaisons, dans lequel on affiche une longueur de coupe à côté du câble dans la zone de travail et/ou on éclaire un point de coupe sur le câble, la zone de travail servant au montage d'un véhicule ferroviaire, dans lequel, pour la visualisation optique, on éclaire un trajet de pose des liaisons par une source lumineuse, la liaison étant montée ensuite dans le trajet de pose.

2. Procédé suivant la revendication 1, **caractérisé en ce que** le montage s'effectue au moins en partie à la main.

3. Procédé suivant l'une des revendications précédentes, **caractérisé en ce que** l'on munit les ensembles d'une caractérisation ou d'un emplacement de stockage fixe, la visualisation s'effectuant en fonction de la caractérisation ou de l'emplacement de stockage.
